# EUROPEAN PATENT APPLICATION

(11) **EP 4 527 492 A1**
(43) Date of publication of application: **26.03.2025**
(21) Application number: 23199201.7
(22) Date of filing: 22.09.2023
(51) Int. Cl.: B01D 53/86, B01D 53/34, C01B 3/04, B01J 8/06

(54) **CONVERSION OF A GAS FEED INTO A HYDROGEN-CONTAINING EFFLUENT GAS, REDUCING A CONTENT OF NITROGEN OXIDES IN THE FLUE GAS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lutz, Michael, 60439 Frankfurt (DE); Cock, Félix, 2040 Antwerpen Anvers (BE); Wentink, Paul, 3197 Rotterdam (NL); Shrivastava, Swatantra Kumar, 60439 Frankfurt (DE); Ulber, Dieter, 60439 Frankfurt (DE)
(74) Representative: Air Liquide

(57) **Abstract**

Apparatus for the conversion of a gas feed into a hydrogen-containing effluent gas, said apparatus comprising :
- a fired equipment (1) configured for the combustion of a fuel stream, thereby generating heat and a flue gas,
- a selective catalytic reductive system arranged in fluid communication with the fired equipment (1) for catalytically reducing a content of nitrogen oxides in the flue gas,
wherein said selective catalytic reductive system comprises at least two catalyst beds, each of the at least two catalyst beds comprising a selective reduction catalyst configured for the selective catalytic reduction of nitrogen oxides, said at least two catalyst beds being fluidically arranged in series to reduce said content of nitrogen oxides in the flue gas.

## Description

The field of the present invention is the conversion of a gas feed into a hydrogen-containing effluent gas.

The replacement of hydrocarbon fuels by alternative fuels, such as low carbon or renewable ammonia, to provide heat to a process of converting a gas feed into hydrogen-containing effluent gas, will lead to significantly higher nitrogen oxide (NOx) levels in the flue gas generated by the combustion of these alternative fuels.

It has also been proposed to perform a post-combustion treatment of the flue gas. For example, it has been proposed a scheme wherein a lean or near-stoichiometric primary combustion stage of the alternative fuel is performed, followed by a secondary stage in order to reduce the unconverted ammonia. Selective catalytic reduction (SCR) over a catalyst bed or selective non-catalytic reduction (SNCR) treatments of the flue gas are also conventionally used technologies.

If some of the above measures are applied when using such alternative fuels, the level of nitrogen oxides emissions can be reduced, however this level will still be much higher than with well-known hydrocarbon fuels.

It is an aim of the present invention to propose an apparatus and a process wherein the level of nitrogen oxides in the flue gas are significantly reduced.

For this purpose, the invention proposes an apparatus for the conversion of a gas feed into a hydrogen-containing effluent gas, said apparatus comprising :
- a fired equipment configured for the combustion of a fuel stream, thereby generating heat and a flue gas,
- a selective catalytic reductive system (4) arranged in fluid communication with the fired equipment for catalytically reducing a content of nitrogen oxides in the flue gas,
   wherein said selective catalytic reductive system (4) comprises at least two catalyst beds, each of the at least two catalyst beds comprising a selective reduction catalyst configured for the selective catalytic reduction of nitrogen oxides, said at least two catalyst beds being fluidically arranged in series to reduce said content of nitrogen oxides in the flue gas.

The at least two beds of selective reduction catalyst in series allow a more efficient reduction of the level of nitrogen oxides in the flue gas compared to the prior art.

In one embodiment, the selective catalytic reductive system (4) comprises a reductant injection system arranged upstream of the at least two catalyst beds, to inject a reductant agent in the flue gas upstream of said at least two catalyst beds. In particular, said reductant injection system comprises at least one nozzle to inject the reductant agent. The reductant injection system may comprise a control valve arranged for the regulation of a flow rate of the reductant agent injected in the flue gas upstream of the at least two catalyst beds.

In one embodiment, the fired equipment comprises at least one burner, in particular at least one air-staged burner, configured for the combustion of said fuel stream.

In one embodiment, said selective reduction catalyst comprises any of the following catalytically active components : titanium oxide, vanadium oxide, molybdenum oxide, tungsten oxide, zeolite and combinations thereof. In particular, one or more of the at least two catalyst beds are honeycomb shaped. Each of the at least two catalyst beds can be configured for operating at a temperature range different from a temperature range of the other catalyst bed(s), for example by comprising a catalytically active component different from a catalytically active component of the other catalyst bed(s).

In one embodiment, the apparatus comprises a flue gas conduit arranged for discharging the flue gas from the fired equipment, said selective catalytic reductive system being arranged in the flue gas conduit.

In one embodiment, the apparatus comprises a conversion section configured for performing the conversion of said gas feed into the hydrogen-containing effluent gas. Said conversion section may comprise a catalyst configured to promote the conversion of said gas feed into the hydrogen containing effluent gas.

In one embodiment, the fired equipment comprises a furnace and the conversion section is arranged in thermal communication with the furnace for the endothermic conversion of said gas feed into the hydrogen-containing effluent gas, recovering heat from the furnace. In particular, the conversion section and the furnace are configured as an autothermal reactor.

In one embodiment, the conversion section comprises one or more catalyst-containing tubes configured for the conversion of said gas feed into the hydrogen-containing effluent gas. The tubes may be extending through the furnace.

Alternatively, the conversion section is arranged in fluid communication with a hydrogen recovery unit for recovering hydrogen from said hydrogen-containing effluent gas, thereby generating an off gas and the fired equipment is arranged in fluid communication with the hydrogen recovery unit for the combustion of said off gas in the fired equipment, thereby generating said flue gas. In particular, the conversion section is configured as an autothermal reactor.

In one embodiment, the flue gas conduit comprises a heat exchanger arranged in the flue gas conduit between said reductant injection system and the at least two catalyst beds (in other words downstream of said reductant injection system and upstream of the at least two catalyst beds). In particular, said heat exchanger is a steam boiler. Said heat exchanger optimizes the mixing of the injected reductant agent with the flue gas before entering the at least two catalyst beds, reducing the space needed in the flue gas conduit for said mixing.

In one embodiment, the at least two catalyst beds are arranged in the flue gas conduit spaced apart from each other. In particular, the at least two catalyst beds are separated from each other by a portion of the flue gas conduit configured for generating turbulences in the flue gas between the at least two catalyst beds. In particular, said portion of the flue gas conduit comprises a static mixer and/or an intermediate injection system configured to inject a reductant agent in the flue gas between the at least two catalyst beds. In particular, said intermediate injection system comprises at least one nozzle to inject the reductant agent. The intermediate injection system may comprise a control valve arranged for the regulation of a flow rate of the reductant agent injected in the flue gas between the at least two catalyst beds.

There can be as many portions of the flue gas conduit comprising a static mixer and/or an intermediate injection system and separating from each other as many catalyst beds of the at least two catalyst beds. Such portion(s) of the flue gas conduit configured for generating turbulences in the flue gas optimize(s) the mixing of reductant agent after an upstream catalyst bed with the flue gas before entering a downstream catalyst bed. Intermediate injection system(s) have the effect to create turbulence in the flue gas between the at least two catalyst beds as well. In addition, said intermediate injection system(s) advantageously allow to cool the flue gas heated by the exothermic reduction of nitrogen oxides in an upstream catalyst bed, before entering a downstream catalyst bed, thereby enhancing a temperature control of said selective catalytic reductive system (4).

In one embodiment, said reductant injection system is configured to inject a higher flow rate of reductant agent than the intermediate injection system. The intermediate injection system, in particular the at least one nozzle and/or control valve, is/are advantageously configured to inject smaller flow rates of reductant agent than the reductant injection system. With such lower flow rates, the level of nitrogen oxides may be finely controlled.

In one embodiment, the selective catalytic reductive system (4) comprises a third catalyst bed comprising a selective reduction catalyst configured for the selective catalytic reduction of nitrogen oxides and arranged downstream of said at least two catalyst beds in the flue gas conduit, said portion of the flue gas conduit being a first portion of the flue gas conduit and said third catalyst bed is separated from the other catalyst beds by a second portion of the flue gas conduit. In particular, said portion of the flue gas conduit comprises a static mixer.

In one embodiment, the flue gas conduit comprises one or more downstream heat exchanger(s) arranged in the flue gas conduit downstream of the selective catalytic reductive system (4). In particular, said one or more downstream heat exchanger(s) is/are selected from a combustion air pre-heater, a steam boiler, a boiler feed water pre-heater, a conversion feed pre-heater, a fuel stream pre-heater, a fuel stream vaporizer or a combination thereof.

In one embodiment, the flue gas conduit comprises a selective non-catalytic reductive system arranged for non-catalytically reducing a content of nitrogen oxides in the flue gas upstream of the selective catalytic reductive system (4). In particular, the selective non-catalytic reductive system comprises a reductant injection unit configured to inject a reductant agent in the flue gas upstream of the selective catalytic reductive system (4).

In one embodiment, the flue gas conduit comprises one or more upstream heat exchanger(s) arranged in the flue gas conduit between said reductant injection unit and said selective catalytic reductive system (4). In particular, said one or more upstream heat exchanger(s) is/are selected from a steam boiler, a steam superheater, a hot combustion air pre-heater, a conversion feed pre-heater, or a combination thereof.

In one embodiment, said one or more upstream heat exchanger(s) comprise a fuel cracker configured to perform an endothermic decomposition reaction of a fuel gas into a cracked fuel by recovering heat from the flue gas, said apparatus comprising a cracked fuel conduit connecting said fuel cracker with the fired equipment to provide said cracked fuel as at least a part of said fuel stream to the fired equipment. Said fuel cracker is for example configured to perform an endothermic decomposition reaction of ammonia.

In one embodiment, said reductant injection system, intermediate injection system and/or reductant injection unit comprises a plurality of nozzles arranged in the flue gas conduit to inject the reductant agent evenly through a cross section of said flue gas conduit. Alternatively or in addition, said reductant injection system, intermediate injection system and/or reductant injection unit comprises one or more pipes extending at least partially through a cross section of said flue gas conduit, each of said pipe(s) comprising a plurality of holes along its length to inject the reductant agent evenly along said pipe.

In one embodiment, the apparatus comprises analyzers arranged for measuring a content of nitrogen oxides and/or reductant agent in the flue gas and/or for measuring a temperature of the flue gas. In particular, the apparatus is configured for regulating a flow rate of reductant agent injected through said reductant injection system, intermediate injection system and/or reductant injection unit according to a content measured by the analyzers. This enables a superior abatement of nitrogen oxides.

In one embodiment, said reductant injection system, intermediate injection system and/or reductant injection unit comprises a reductant vaporizer configured for vaporizing reductant agent provided in a liquid form. In particular, the reductant vaporizer is arranged in fluid communication with the fired equipment, in particular in fluid communication with the flue gas conduit, for feeding part of the flue gas to the reductant vaporizer and mixing said part of the flue gas with the reductant agent, thereby vaporizing said reductant agent. Alternatively, the reductant vaporizer comprises an electrical heater and/or a steam heater.

In one embodiment, the flue gas conduit comprises a catalytic and/or thermal oxidizer arranged for the removal of nitrous oxides (N₂O) in the flue gas downstream of said selective catalytic reductive system (4).

In one embodiment, the furnace comprises a direct injection system arranged to inject a reductant agent directly in said furnace. This contributes to further reduce the content of nitrogen oxides in the flue gas.

In one embodiment, the flue gas conduit is connected to a stack downstream of said selective catalytic reductive system (4), in particular downstream of said one or more downstream heat exchanger(s), to discharge a nitrogen oxide depleted flue gas to the atmosphere through said stack.

In one embodiment, said apparatus is an apparatus for the cracking conversion of an ammonia feed into an effluent gas comprising hydrogen and nitrogen. In particular, said apparatus comprises an ammonia removal unit configured to remove unconverted ammonia from the effluent gas by absorption, thereby generating a liquid stream comprising the unconverted ammonia. In particular, the apparatus comprises a liquid stream conduit connecting the ammonia removal unit with said reductant injection system, intermediate injection system, reductant injection unit and/or direct injection system to feed said liquid stream as reductant agent to respectively said reductant injection system, intermediate injection system, reductant injection unit and/or direct injection system. Such a liquid stream is typically useful when a low concentration of ammonia in said reductant agent is needed.

In particular, the ammonia removal unit is fluidically connected to said conversion section for the treatment of said effluent gas.

In one embodiment, said ammonia removal unit comprises a scrubbing unit, such as a water wash column.

In one embodiment, said apparatus for the cracking conversion of an ammonia feed comprises :
- an unconverted ammonia recovery unit configured to recover the unconverted ammonia from said liquid stream, thereby generating an overhead ammonia-water stream comprising gaseous ammonia and water,
- an overhead stream conduit connecting the unconverted ammonia recovery unit with said reductant injection system, intermediate injection system, reductant injection unit and/or direct injection system to feed said overhead ammonia-water stream as reductant agent to respectively said reductant injection system, intermediate injection system, reductant injection unit and/or direct injection system. This overhead ammonia-water stream can have a much higher ammonia concentration than typical aqueous ammonia. Using this overhead ammonia-water stream as reductant agent avoids the evaporation of the ammonia contained in the reductant agent and the temperature of a downstream SCR catalyst bed is in consequence less impacted.
   Said unconverted ammonia recovery unit comprises for example a stripping or distillation column.

In one embodiment, the ammonia removal unit and the unconverted ammonia recovery unit are fluidically connected with each other by a fluid loop.

In one embodiment, said apparatus is an apparatus for the conversion of a hydrocarbon feed into a synthesis gas comprising hydrogen and carbon monoxide.

The invention also proposes a process comprising the conversion of a gas feed into a hydrogen-containing effluent gas, said process comprising :
- providing a fuel stream,
- combusting said fuel stream to provide a heat input to the process, thereby generating a flue gas comprising nitrogen oxides,
- passing said flue gas with a reductant agent through a first catalyst bed comprising a selective reduction catalyst, thereby obtaining a first nitrogen oxide depleted flue gas,
- passing said first nitrogen oxides depleted flue gas through a second catalyst bed comprising a selective reduction catalyst, thereby obtaining a second nitrogen oxide depleted flue gas having a further reduced nitrogen oxide content compared to the first nitrogen oxides depleted flue gas.

The first nitrogen oxides depleted flue gas has a reduced nitrogen oxide content compared to the flue gas. The reductant agent is reacted onto the first catalyst bed, thereby reducing a content of nitrogen oxides in the flue gas (selective catalytic reduction of the nitrogen oxides). In one embodiment, the flue gas has a nitrogen oxide content of between 100 and 20000 ppm, in particular between 100 and 10000 ppm, in particular between 1000 and 3000 ppm, the first nitrogen oxides depleted flue gas has a nitrogen oxide content of between 10 and 1000 ppm and the second nitrogen oxides depleted flue gas has a nitrogen oxide content of between 1 and 100 ppm, in particular between 5 and 50 ppm, in particular between 5 and 25 ppm. The second nitrogen oxide depleted flue gas may have a content between 0 and 20 ppm of residual ammonia, in particular between 1 and 10 ppm of residual ammonia.

In one embodiment, the combustion of said fuel stream is performed with an oxidizing agent stream, such as atmospheric air or oxygen-enriched air.

In one embodiment, the nitrogen oxides comprise nitrogen monoxide (NO), nitrogen dioxide (NO₂), and/or other compounds of nitrogen and oxygen.

In one embodiment, said fuel stream comprises ammonia, refinery waste gases, a cracked fuel, such as cracked ammonia, a hydrogen recovery unit off gas, such as a pressure swing adsorption unit off gas, and/or hydrogen. In one embodiment, said fuel stream comprises at least 90% of ammonia, preferably at least 95% of ammonia. In particular, said fuel stream is substantially pure ammonia.

In one embodiment, the process comprises a step of injecting a reductant agent in the flue gas prior to passing said flue gas through the first catalyst bed. Said reductant agent may be injected with a reductant injection system.

In one embodiment, the process comprises a step of cooling the flue gas prior to passing said flue gas through the first catalyst bed.

In one embodiment, said fuel stream is combusted in a fired equipment and said generated flue gas is discharged from said fired equipment prior to passing said flue gas through the first catalyst bed. In particular, said fuel stream and said oxidizing agent stream are fed to said fired equipment for performing said combustion. In one embodiment, said flue gas is discharged from said fired equipment in a flue gas conduit and the first and second catalyst beds are arranged in said flue gas conduit. In particular, the process comprises a step of discharging said first nitrogen oxide depleted flue gas from said first catalyst bed in said flue gas conduit and passing said discharged first nitrogen oxide depleted flue gas through said second catalyst bed. In one embodiment, said generated flue gas is discharged from said fired equipment at a temperature between 700 and 1200°C. In particular, a temperature of the discharged flue gas is decreased by up to 110°C during said step of injecting a reductant agent in the flue gas.

In one embodiment, said first catalyst bed and/or said second catalyst bed is/are performing a selective catalytic reduction of the nitrogen oxides at a temperature comprised between 200 and 500°C, preferably between 280 and 400°C, preferably between 300 and 400°C.

In one embodiment, the process comprises a mixing step comprising mixing said reductant agent injected in the flue gas with the flue gas prior to passing said flue gas through the first catalyst bed. Said mixing step may be performed by passing said flue gas with the injected reductant agent through a heat exchanger. In particular, said heat exchanger is a steam boiler. In one embodiment, said mixing step comprises also cooling said flue gas prior to passing said flue gas through the first catalyst bed.

In one embodiment, the conversion of the gas feed comprises an endothermic conversion of said gas feed into said hydrogen-containing effluent gas. In particular, said heat input comprises combusting said fuel stream to provide heat to the endothermic conversion. In particular, said fired equipment comprises a furnace and said heat input comprises combusting said fuel stream in said furnace to provide heat to the endothermic conversion.

In one embodiment, said first nitrogen oxide depleted flue gas comprises a remaining reductant agent content and the process comprises an intermediate mixing step comprising further mixing said remaining reductant agent with said first nitrogen oxide depleted flue gas prior to passing said first nitrogen oxide depleted flue gas through the second catalyst bed. Said intermediate mixing step may be performed by passing said first nitrogen oxide depleted flue gas with said remaining reductant agent content through a static mixer or through a heat exchanger.

In one embodiment, the process comprises injecting a reductant agent in the first nitrogen oxide depleted flue gas prior to passing said first nitrogen oxide depleted flue gas through the second catalyst bed. In particular, the process comprises controlling a flow rate of said reductant agent injected in the first nitrogen oxide depleted flue gas so as to be below a flow rate of said reductant agent injected in the flue gas prior to passing said flue gas through the first catalyst bed.

In one embodiment, the second nitrogen oxide depleted flue gas comprises a remaining reductant agent content and the process comprises :
- further mixing said remaining reductant agent with said second nitrogen oxide depleted flue gas, in particular by passing said second nitrogen oxide depleted flue gas with said remaining reductant agent content through a static mixer, thereby obtaining a mixed second nitrogen oxides depleted flue gas,
- passing said mixed second nitrogen oxide depleted flue gas through a third catalyst bed comprising a selective reduction catalyst, thereby obtaining a third nitrogen oxide depleted flue gas having a further reduced nitrogen oxide content compared to the second nitrogen oxide depleted flue gas.

In one embodiment, the process comprises performing a selective non-catalytic reduction of the nitrogen oxides of the flue gas, in particular a selective non-catalytic reduction of the nitrogen oxides of the flue gas discharged from the fired equipment, by injecting a reductant agent, for example through a reductant injection unit, in said flue gas at a temperature of the flue gas comprised between 700 and 1200°C, preferably between 760 and 1090 °C, prior to passing said flue gas through the first catalyst bed.

In one embodiment, the process comprises an upstream mixing step comprising further mixing a remaining reductant agent content in the flue gas with said flue gas downstream of said reductant injection unit and upstream of said reductant injection system. Said upstream mixing step may be performed by passing said flue gas with the reductant agent injected during the selective non-catalytic reduction through one or more upstream heat exchanger(s). In particular, said one or more upstream heat exchanger(s) comprise at least one steam boiler. In one embodiment, said upstream mixing step comprises also cooling said flue gas downstream of said selective non-catalytic reduction.

In one embodiment, said one or more upstream heat exchanger(s) comprise a fuel cracker performing an endothermic decomposition reaction of a fuel gas into a cracked fuel by recovering heat from the flue gas, the process comprising providing said cracked fuel as at least a part of said fuel stream. Said endothermic decomposition reaction may be catalytic or non-catalytic.

In one embodiment, the process comprises a step of injecting a reductant agent in the flue gas before discharging said flue gas from the furnace, thereby reducing a content of nitrogen oxides in said flue gas.

In one embodiment, the process comprises a step of cooling said second nitrogen oxides depleted flue gas or said third nitrogen oxides depleted flue gas. In particular, the process comprises a step of discharging said cooled second nitrogen oxides depleted flue gas or said cooled third nitrogen oxides depleted flue gas to the atmosphere through a stack.

In one embodiment, said injected reductant agent(s) is/are selected from anhydrous ammonia (NH₃), aqueous ammonia (NH₄OH), urea (CH₄N₂O), or a combination of these reductant agents, each one being injected at a different injection point. In particular, the aqueous ammonia comprises more than 20% of ammonia content, preferably more than 30% of ammonia content.

In one embodiment, the process comprises :
- providing reductant agent in a liquid form,
- vaporizing the provided reductant agent,
- injecting the vaporized reductant agent as said reductant agent injected in the flue gas prior to passing said flue gas through the first catalyst bed, as said reductant agent injected in the first nitrogen oxide depleted flue gas, as said reductant agent injected for said selective non-catalytic reduction and/or as said reductant agent injected in the flue gas before discharging said flue gas from the furnace.

In particular, the provided reductant agent is vaporized by feeding part of the flue gas to the provided reductant agent and mixing said part of the flue gas with the reductant agent, thereby vaporizing said reductant agent. Alternatively, the provided reductant agent is vaporized by electrical heating and/or steam heating.

In one embodiment, the process comprises :
- mixing the reductant agent, in particular the vaporized reductant agent, with air,
- injecting the reductant agent mixed with air as said reductant agent injected in the flue gas prior to passing said flue gas through the first catalyst bed, as said reductant agent injected in the first nitrogen oxide depleted flue gas, as said reductant agent injected for said selective non-catalytic reduction and/or as said reductant agent injected in the flue gas before discharging said flue gas from the furnace.

In particular, the reductant agent is mixed with air provided at a determined air feed flowrate.

In one embodiment, the process comprises :
- measuring a temperature of the flue gas downstream of said step of injecting a reductant agent in the flue gas, in particular measuring a temperature of the flue gas downstream of said mixing step,
- and/or measuring a temperature of the first nitrogen oxide depleted flue gas.

In one embodiment, the process comprises controlling a temperature of the flue gas downstream of said step of injecting a reductant agent in the flue gas by performing one or more of the following temperature control steps :
a- decreasing an amount of reductant agent injected in the flue gas prior to passing said flue gas through the first catalyst bed,
b- decreasing an amount of reductant agent injected in the flue gas during the selective non-catalytic reduction,
c- decreasing an amount of reductant agent injected in the flue gas before discharging said flue gas from the furnace,
d - increasing the air feed flowrate and injecting the reductant agent mixed with air provided at said increased air feed flowrate as said reductant agent injected in the flue gas prior to passing said flue gas through the first catalyst bed, as said reductant agent injected for said selective non-catalytic reduction and/or as said reductant agent injected in the flue gas before discharging said flue gas from the furnace,
e- increasing a steam pressure in said heat exchanger being a steam boiler,
f- increasing a steam pressure in said one or more upstream heat exchanger(s) being a steam boiler/steam boilers,
g- increasing a pre-heat temperature of the oxidizing agent stream before feeding said oxidizing agent stream to the fired equipment,
h- increasing a pre-heat temperature of said fuel stream before feeding said fuel stream to the fired equipment,
i- increasing an amount of reductant agent injected in the flue gas prior to passing said flue gas through the first catalyst bed,
j- increasing an amount of reductant agent injected in the flue gas during the selective non-catalytic reduction,
k- increasing an amount of reductant agent injected in the flue gas before discharging said flue gas from the furnace,
l- decreasing the air feed flowrate and injecting the reductant agent mixed with air provided at said decreased air feed flowrate as said reductant agent injected in the flue gas prior to passing said flue gas through the first catalyst bed, as said reductant agent injected for said selective non-catalytic reduction and/or as said reductant agent injected in the flue gas before discharging said flue gas from the furnace,
m- decreasing a steam pressure in said heat exchanger being a steam boiler,
n- decreasing a steam pressure in said one or more upstream heat exchanger(s) being a steam boiler/steam boilers,
o- decreasing a pre-heat temperature of the oxidizing agent stream before feeding said oxidizing agent stream to the fired equipment,
p- decreasing a pre-heat temperature of said fuel stream before feeding said fuel stream to the fired equipment.

In one embodiment, the process comprises comparing said measured temperature of the flue gas with a first predetermined flue gas temperature value, the process comprising performing one or more of said temperature control steps a- to h-, if said measured temperature is below said first predetermined flue gas temperature value.

In one embodiment, the process comprises comparing said measured temperature of the flue gas with a second predetermined flue gas temperature value, the process comprising performing one or more of said temperature control steps i- to p-, if said measured temperature is above said second predetermined flue gas temperature value.

Said first and second predetermined flue gas temperature values may be the same value.

In one embodiment, the process comprises controlling a temperature of the first nitrogen oxide depleted flue gas by performing one or more of the following temperature control steps :
a'- decreasing an amount of reductant agent injected in the first nitrogen oxide depleted flue gas prior to passing said first nitrogen oxides depleted flue gas through the second catalyst bed,
b'- decreasing an amount of reductant agent injected in the flue gas prior to passing said flue gas through the first catalyst bed,
c'- decreasing an amount of reductant agent injected in the flue gas during the selective non-catalytic reduction,
d'- decreasing an amount of reductant agent injected in the flue gas before discharging said flue gas from the furnace,
e'- increasing the air feed flowrate and injecting the reductant agent mixed with air provided at said increased air feed flowrate as said reductant agent injected in the flue gas prior to passing said flue gas through the first catalyst bed, as said reductant agent injected for said selective non-catalytic reduction, as said reductant agent injected in the flue gas before discharging said flue gas from the furnace and/or as said reductant agent injected in the first nitrogen oxide depleted flue gas prior to passing said first nitrogen oxides depleted flue gas through the second catalyst bed,
f'- increasing a steam pressure in said heat exchanger being a steam boiler,
g'- increasing a steam pressure in said one or more upstream heat exchanger(s) being a steam boiler/steam boilers,
h'- increasing a pre-heat temperature of the oxidizing agent stream before feeding said oxidizing agent stream to the fired equipment,
i'- increasing a pre-heat temperature of said fuel stream before feeding said fuel stream to the fired equipment,
j'- increasing an amount of reductant agent injected in the first nitrogen oxide depleted flue gas prior to passing said first nitrogen oxides depleted flue gas through the second catalyst bed,
k'- increasing an amount of reductant agent injected in the flue gas prior to passing said flue gas through the first catalyst bed,
l'- increasing an amount of reductant agent injected in the flue gas during the selective non-catalytic reduction,
m'- increasing an amount of reductant agent injected in the flue gas before discharging said flue gas from the furnace,
n'- decreasing the air feed flowrate and injecting the reductant agent mixed with air provided at said decreased air feed flowrate as said reductant agent injected in the flue gas prior to passing said flue gas through the first catalyst bed, as said reductant agent injected for said selective non-catalytic reduction, as said reductant agent injected in the flue gas before discharging said flue gas from the furnace and/or as said reductant agent injected in the first nitrogen oxide depleted flue gas prior to passing said first nitrogen oxides depleted flue gas through the second catalyst bed,
o'- decreasing a steam pressure in said heat exchanger being a steam boiler,
p'- decreasing a steam pressure in said one or more upstream heat exchanger(s) being a steam boiler/steam boilers,
q'- decreasing a pre-heat temperature of the oxidizing agent stream before feeding said oxidizing agent stream to the fired equipment,
r'- decreasing a pre-heat temperature of said fuel stream before feeding said fuel stream to the fired equipment.

In one embodiment, the process comprises comparing said measured temperature of the first nitrogen oxide depleted flue gas with a first predetermined nitrogen oxide depleted flue gas temperature value, the process comprising performing one or more of said temperature control steps a'- to i'-, if said measured temperature is below said first predetermined nitrogen oxide depleted flue gas temperature value.

In one embodiment, the process comprises comparing said measured temperature of the first nitrogen oxide depleted flue gas with a second predetermined nitrogen oxide depleted flue gas temperature value, the process comprising performing one or more of said temperature control steps j' to r', if said measured temperature is above said second predetermined nitrogen oxide depleted flue gas temperature value.

Said first and second predetermined nitrogen oxide depleted flue gas temperature values may be the same value.

In one embodiment, said first predetermined flue gas temperature value and/or said second predetermined flue gas temperature value is/are comprised between a first activity minimum temperature of the selective reduction catalyst comprised in the first catalyst bed and a maximum application temperature of said selective reduction catalyst. In one embodiment, said first predetermined nitrogen oxide depleted flue gas temperature value and/or said second predetermined nitrogen oxide depleted flue gas temperature value is/are comprised between a first activity minimum temperature of the selective reduction catalyst comprised in the second catalyst bed and a maximum application temperature of said selective reduction catalyst.

In one embodiment, the process comprises measuring a content of reductant agent in the first nitrogen oxide depleted flue gas and/or measuring a content of reductant agent in the second nitrogen oxide depleted flue gas.

In one embodiment, the process comprises reducing a content of reductant agent in the first and/or second nitrogen oxide depleted flue gas by performing one or more of the following reductant agent content control steps :
a- decreasing an amount of reductant agent injected in the first nitrogen oxide depleted flue gas prior to passing said first nitrogen oxides depleted flue gas through the second catalyst bed,
b- decreasing an amount of reductant agent injected in the flue gas prior to passing said flue gas through the first catalyst bed,
c- decreasing an amount of reductant agent injected in the flue gas during the selective non-catalytic reduction,
d- decreasing an amount of reductant agent injected in the flue gas before discharging said flue gas from the furnace.

This is in particular useful in case of reductant agent slippage downstream the first or second catalyst bed.

In one embodiment, the process comprising comparing said measured content of reductant agent in the first or second nitrogen oxide depleted flue gas with a reductant content predetermined value, the process comprising performing one or more of the reductant agent content control steps a to d, if said measured content of reductant agent in the first and/or second nitrogen oxide depleted flue gas is above said reductant content predetermined value.

In one embodiment, the process comprises measuring a content of nitrogen oxide in the first nitrogen oxide depleted flue gas and/or measuring a content of nitrogen oxide in the second nitrogen oxide depleted flue gas.

In alternative or addition, the process comprises estimating a content of nitrogen oxide in the first nitrogen oxide depleted flue gas and/or estimating a content of nitrogen oxide in the second nitrogen oxide depleted flue gas in function of a fuel stream / oxidizing agent stream admixing ratio in the fired equipment, for example by using an empirical formula of nitrogen oxide burner emissions.

In one embodiment, the process comprises reducing a content of nitrogen oxide in the first or second nitrogen oxide depleted flue gas by performing one or more of the following nitrogen oxide control steps :
a- increasing an amount of reductant agent injected in the first nitrogen oxide depleted flue gas prior to passing said first nitrogen oxides depleted flue gas through the second catalyst bed,
b- increasing an amount of reductant agent injected in the flue gas prior to passing said flue gas through the first catalyst bed,
c- increasing an amount of reductant agent injected in the flue gas during the selective non-catalytic reduction,
d- increasing an amount of reductant agent injected in the flue gas before discharging said flue gas from the furnace.

In one embodiment, the process comprises comparing said measured or estimated content of nitrogen oxide in the first or second nitrogen oxide depleted flue gas with a nitrogen oxide content predetermined value, the process comprising performing one or more of the nitrogen oxide control steps a- to d-, if said measured or estimated content of nitrogen oxide is above said nitrogen oxide content predetermined value, in particular until said measured content of reductant agent in the first and/or second nitrogen oxide depleted flue gas is above said reductant content predetermined value.

In one embodiment, the gas feed is an ammonia feed comprising ammonia and said endothermic conversion of said gas feed comprises an endothermic cracking conversion of said ammonia feed into said effluent gas, the effluent gas comprising hydrogen and nitrogen.

In one embodiment, said effluent gas comprising hydrogen and nitrogen also comprises unconverted ammonia and the process comprises :
- removing said unconverted ammonia from the effluent gas by absorption, thereby generating a liquid stream comprising the unconverted ammonia,
- injecting said liquid stream as one of the injected reductant agents.

In particular, the process comprises :
- recovering said unconverted ammonia from said liquid stream, thereby generating an overhead ammonia-water stream comprising gaseous ammonia and water,
- injecting said ammonia-water stream as one of the injected reductant agents.

In one embodiment, said ammonia feed comprises at least 99% of ammonia, preferably at least 99,5% of ammonia. In one embodiment, said ammonia feed is obtained from a liquid ammonia feedstock that has been vaporized, in particular vaporized and superheated. In particular, said liquid ammonia feedstock is pressurized to produce pressurized liquid ammonia, said pressurized liquid ammonia being vaporized, in particular vaporized and superheated.

In another embodiment, the gas feed is a hydrocarbon feed. In particular, said conversion comprises the conversion of said hydrocarbon feed into a synthesis gas comprising hydrogen and carbon monoxide.

The invention also proposes a method of revamping of a plant for the conversion of a gas feed into a hydrogen-containing effluent gas, said plant comprising :
- a fired equipment configured for the combustion of a fuel stream, thereby generating heat and a flue gas,
- a flue gas conduit arranged for discharging the flue gas from the fired equipment,
said method comprising arranging at least two catalyst beds in series in said flue gas conduit, each of the at least two catalyst beds comprising a selective reduction catalyst configured for the selective catalytic reduction of nitrogen oxides.

In one embodiment, the method comprises arranging a reductant injection system upstream of the at least two catalyst beds in the flue gas conduit, to inject a reductant agent in the flue gas upstream of said at least two catalyst beds.

In one embodiment, the method comprises arranging the at least two catalyst beds spaced apart from each other in the flue gas conduit. In particular, the method comprises arranging a static mixer and/or an intermediate reductant injection system in said flue gas conduit, between said at least two catalyst beds.

In one embodiment, the method comprises :
- arranging a third catalyst bed in series with said at least two catalyst beds and downstream of said at least two catalyst beds in said flue gas conduit, said third catalyst bed comprising a selective reduction catalyst configured for the selective catalytic reduction of nitrogen oxides
- arranging a static mixer in the flue gas conduit between said third catalyst bed and said at least two catalyst beds (upstream of said third catalyst bed and downstream of said at least two catalyst beds).

In one embodiment, the flue gas conduit comprises a heat exchanger for cooling said flue gas, said method comprising arranging said at least two catalyst beds downstream of said heat exchanger and arranging said reductant injection system upstream of said heat exchanger. Said heat exchanger optimizes the mixing of the injected reductant agent with the flue gas before entering the at least two catalyst beds, obviating the need for a flue gas conduit length extension. Said heat exchanger may be a steam boiler.

In one embodiment, the flue gas conduit comprises an upstream heat exchanger for cooling said flue gas, said method comprises arranging said reductant injection system downstream of said upstream heat exchanger and arranging a reductant injection unit configured to inject a reductant agent in the flue gas in the flue gas conduit, upstream of said upstream heat exchanger.

In one embodiment, the heat exchanger and/or upstream heat exchanger are part of a flue gas recovery system of said plant.

In one embodiment, the plant comprises a conversion section for performing an endothermic conversion of the gas feed and the fired equipment comprises a furnace arranged in thermal communication with the conversion section to provide heat to the endothermic conversion and the method comprises arranging a direct injection system in the furnace, to inject a reductant agent directly in said furnace.
[Fig 1] is a schematic view of a first embodiment of the invention showing elements of the furnace and flue gas conduit,
[Fig. 2] is a schematic view of a second embodiment of the invention,
[Fig. 3] is a schematic view of a third embodiment of the invention.

In the following description, the word "connecting" in relation to a line, a conduit or a pipe shall be understood as fluidically connecting.

The terms "upstream" and "downstream" in connection with an element arranged in the flue gas conduit are defined by reference to the circulation of the flue gas in said flue gas conduit.

The term fired equipment denotes that the combustion is made with the formation of a flame.

The term trim fuel denotes a fuel that is not recycled from the process or from the apparatus, that advantageously comes from the battery limit, typically useful for a quick heat regulation or for the apparatus start-up.

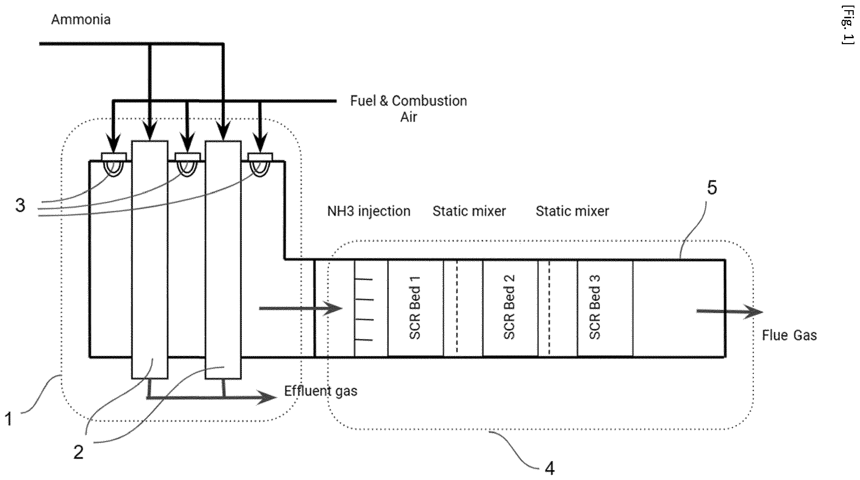

Figure 1 represents an apparatus configured for the cracking conversion of an ammonia feed into an effluent gas comprising hydrogen, nitrogen (also called cracked gas), and potentially unconverted ammonia. The apparatus comprises a furnace 1 equipped with burners 3 for performing a combustion of a fuel stream of ammonia with air as an oxidizing agent (combustion air). The invention covers other devices as fired equipment, such as a feed pre-heater, a water boiler or a gas turbine. An oxygen-enriched air having more than 20,95 % of oxygen content may as well be used as oxidizing agent. Tubes filled with a catalyst configured for promoting the cracking conversion are extending through the furnace 1. The ammonia feed is flowed through said tubes heated by the combustion. The ammonia is splitted to hydrogen and nitrogen in an endothermic reaction taking the heat generated from said combustion.

The combustion generates along with said heat a flue gas that may comprise harmful nitrogen oxide (NOx) species. The apparatus comprises a flue gas conduit 5 (or conduit) in fluid communication with the furnace 1 for discharging the flue gas from the furnace 1. The conduit comprises a selective catalytic reductive system (also called SCR system). In the represented embodiments, the SCR system comprises three beds of a selective reduction catalyst in series spaced appart from each other by a portion of the conduit (SCR Bed 1, SCR Bed 2 and SCR Bed 3). It is to be understood that the SCR system may as well comprise only two beds of a selective reduction catalyst, or more than three beds of a selective reduction catalyst. Said at least two catalyst beds are fluidically arranged in series with regard to the flue gas circulation.

The SCR system comprises an reductant injection system that injects ammonia upstream of the catalyst beds as a reductant agent. It should be understood that a reductant agent may as well be already contained within the flue gas. The reductant agent may be sprayed evenly through a cross section of the conduit by nozzles of the reductant injection system and the injected ammonia is mixed within the flue gas. A static mixer is arranged between each of the catalyst beds to generate turbulences enhancing the intermediate mixing of remaining reductant agent within the flue gas after the first and second catalyst bed, before the flue gas enters the next catalyst bed for further NOx reduction.

It is to be understood that other reductant agents are covered by the invention, such as urea. An aqueous ammonia reductant agent may be provided from an ammonia removal unit configured to remove the unconverted ammonia from the effluent gas by absorption, thereby generating a liquid stream loaded with the absorbed unconverted ammonia. The ammonia removal unit may be a scrubbing unit, in particular a wash column. These are not represented.

The ammonia reductant agent may be as well provided from an unconverted ammonia recovery unit connected to the ammonia removal unit by a fluid loop to recover the absorbed unconverted ammonia from said liquid stream. The unconverted ammonia recovery unit may be a stripping column or a distillation column. Part of the recovered unconverted ammonia may also be recycled with said ammonia feed. These are not represented.

In an embodiment wherein the reductant agent is available in a liquid form (for example aqueous or liquid anhydrous ammonia), it may be vaporized by mixing with hot flue gas, electrical or steam heating. The reductant agent may as well be mixed with air prior to injection in the conduit.

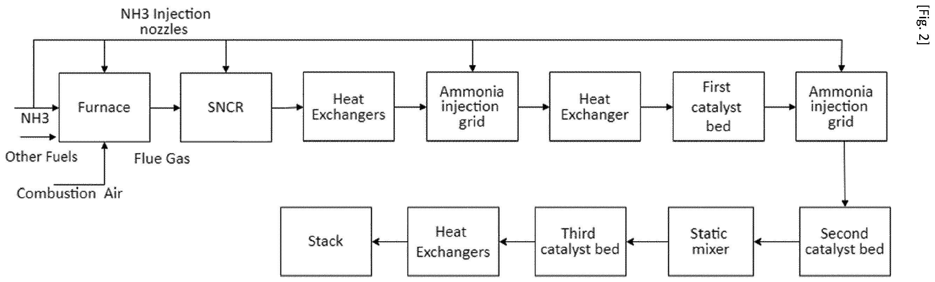

Figure 2 represents another embodiment of the invention, wherein a fuel stream of ammonia is combusted in the furnace 1 along with an additional fuel (for example a trim fuel) and with air as an oxidizing agent. A flow path of the gas streams through the furnace 1 and through the flue gas conduit 5 is represented, without representing the walls of said furnace 1 and of said flue gas conduit 5. In this embodiment compared to the embodiment of figure 1, the flue gas conduit 5 comprises a heat exchanger, typically a steam boiler, upstream the SCR system. This heat exchanger is homogenizing the mixing of the reductant agent in the flue gas and allows to control a temperature of the flue gas as well.

Ammonia is injected as reductant agent at different levels, including an intermediate injection system in the form of an injection grid between a first selective reduction catalyst bed and a second selective reduction catalyst bed. The injection grid creates turbulence in the flue gas which further homogenizes the mixing of the reductant agent and also allows to cool the flue gas by the injected reductant agent. The injection grid is advantageously configured to inject less reductant agent as the reductant injection system, an thus allows a finer control of the NOx reduction and flue gas temperature. As in the embodiment of figure 1, a static mixer is arranged the second selective reduction catalyst bed and a third one.

The flue gas conduit 5 comprises a selective non-catalytic reduction system (also called SCNR system) wherein ammonia is injected in the flue gas being at a temperature between 760°C and 1090°C. This SCNR system is already contributing to the reduction of NOx upstream of the SCR system. One or more heat exchangers, including for example a steam boiler or a steam superheater, are arranged in the flue gas conduit 5 downstream of the SCNR system and upstream of the SCR system, contributing to mixing of the reductant agent homogeneously in the flue gas and to controlling the temperature of the flue gas.

Ammonia is as well injected directly in the furnace 1, which further contributes to the reduction of NOx upstream of the SCR system. One or more heat exchangers are arranged in the flue gas conduit 5 to finally cool the flue gas to a temperature compatible to a discharge to the atmosphere through the stack. These heat exchangers may be used to heat or pre-heat a process stream such as the fuel stream of ammonia or the combustion air.

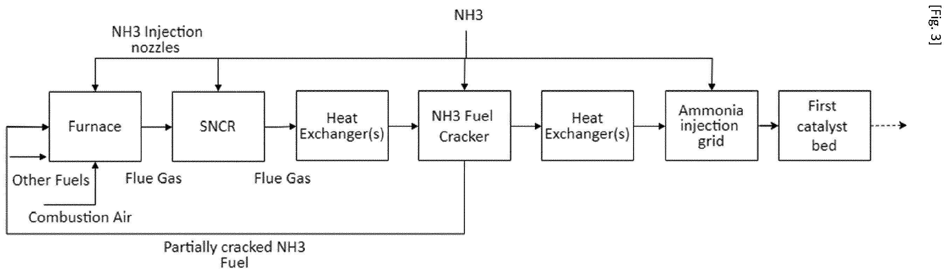

The embodiment of figure 3 differs from the one of figure 2 in that the flue gas conduit 5 comprises a heat exchanger (NH3 fuel cracker) configured as a fuel cracker to at least partially crack the fuel stream of ammonia prior to said combustion in the furnace 1. Said fuel cracker recovers heat from the flue gas to perform the endothermic cracking reaction, with or without a catalyst. Only the left part of the flow path of the flue gas through the flue gas conduit 5, comprising said fuel cracker, is represented here.

The apparatus may comprise a programmable logic controller (or controller) connected to analyzers (not represented) to adjust an amount of reductant agent injected according to a parameter measured by said analyzers. This allows for example to control a temperature of the flue gas, the injected reductant agent having an effect of cooling said flue gas. The controller may as well control the temperature of the flue gas by controlling a flow rate of the air mixed with said reductant agent before injection, by controlling a pressure of the steam in said steam boiler(s) or by controlling a pre-heat temperature of said combustion air. The control of the flue gas temperature may be important in the presence of multiple selective reduction catalyst beds, under some operating condition. This can be implemented taking into account the exothermic nature of said NOx reduction reaction, a minimum catalyst activity temperature and a maximum catalyst application temperature.

The controller may be as well configured to adjust an amount of reductant agent injected according to a NOx content measured by the analyzers and/or according to an ammonia slippage measured by the analyzers downstream of one or more of the catalyst beds.

The flue gas passes through said multiple beds in series and the selective reduction catalyst reduces the nitrogen oxide species in the flue gas in an efficient way that was not considered in the prior art so far. The flue gas conduit 5 may be connected to a stack for discharging the flue gas to the atmosphere. The flue gas discharged to the atmosphere comprises down to 25ppm of NOx, or even less. Existing plants may be revamped to the use of fuel gas and/or operating conditions with high NOx emission potential, arranging at least one additional selective reduction catalyst bed downstream an existing selective reduction catalyst bed in the flue gas conduit 5.

It is to be understood that any other measure may be taken to further purify the flue gas, such as performing a catalytic and/or thermal oxidation downstream of the SCR system to reduce a level of nitrous oxides in the flus gas.

## Claims

1. Apparatus for the conversion of a gas feed into a hydrogen-containing effluent gas, said apparatus comprising :
- a fired equipment (1) configured for the combustion of a fuel stream, thereby generating heat and a flue gas,
- a selective catalytic reductive system arranged in fluid communication with the fired equipment (1) for catalytically reducing a content of nitrogen oxides in the flue gas, wherein said selective catalytic reductive system comprises at least two catalyst beds, each of the at least two catalyst beds comprising a selective reduction catalyst configured for the selective catalytic reduction of nitrogen oxides, said at least two catalyst beds being fluidically arranged in series to reduce said content of nitrogen oxides in the flue gas.

2. Apparatus according to the preceding claim, wherein the selective catalytic reductive system comprises a reductant injection system arranged upstream of the at least two catalyst beds, to inject a reductant agent in the flue gas upstream of said at least two catalyst beds.

3. Apparatus according to one of the preceding claims comprising a flue gas conduit (5) arranged for discharging the flue gas from the fired equipment (1), said selective catalytic reductive system being arranged in the flue gas conduit (5).

4. Apparatus according to one of the preceding claims comprising a conversion section (2) configured for performing the conversion of said gas feed into the hydrogen-containing effluent gas, wherein the fired equipment comprises a furnace and the conversion section (2) is arranged in thermal communication with the furnace for the endothermic conversion of said gas feed into the hydrogen-containing effluent gas, recovering heat from the furnace (1).

5. Apparatus according to one of the preceding claims, wherein the flue gas conduit (5) comprises a heat exchanger arranged in the flue gas conduit (5) between said reductant injection system and the at least two catalyst beds.

6. Apparatus according to one of the preceding claims, wherein the at least two catalyst beds are arranged in the flue gas conduit (5) spaced apart from each other by a portion of the flue gas conduit (5) configured for generating turbulences in the flue gas between the at least two catalyst beds.

7. Apparatus according to the preceding claim, wherein said portion of the flue gas conduit (5) comprises a static mixer and/or an intermediate injection system configured to inject a reductant agent in the flue gas between the at least two catalyst beds.

8. Apparatus according to one of the preceding claims, wherein the flue gas conduit (5) comprises a selective non-catalytic reductive system arranged for non-catalytically reducing a content of nitrogen oxides in the flue gas upstream of the selective catalytic reductive system, the selective non-catalytic reductive system comprising a reductant injection unit configured to inject a reductant agent in the flue gas upstream of the selective catalytic reductive system.

9. Apparatus according to the preceding claim, wherein the flue gas conduit (5) comprises one or more upstream heat exchanger(s) arranged in the flue gas conduit (5) between said reductant injection unit and said selective catalytic reductive system.

10. Apparatus according to one of the preceding claims in combination with claim 4, wherein the furnace (1) comprises a direct injection system arranged to inject a reductant agent directly in said furnace (1).

11. Apparatus according to one of claim 3 to 10 in combination with claim 2 or according to claim 2 for the cracking conversion of an ammonia feed into an effluent gas comprising hydrogen and nitrogen, said apparatus comprising :
- an ammonia removal unit configured to remove unconverted ammonia from the effluent gas by absorption, thereby generating a liquid stream comprising the unconverted ammonia
- a liquid stream conduit connecting the ammonia removal unit with said reductant injection system to feed said liquid stream as reductant agent to said reductant injection system.

12. Apparatus according to the preceding claim, comprising :
- an unconverted ammonia recovery unit configured to recover the unconverted ammonia from said liquid stream, thereby generating an overhead ammonia-water stream comprising gaseous ammonia and water,
- an overhead stream conduit connecting the unconverted ammonia recovery unit with said reductant injection system to feed said overhead ammonia-water stream as reductant agent to said reductant injection system.

13. Process comprising the conversion of a gas feed into a hydrogen-containing effluent gas, said process comprising :
- providing a fuel stream,
- combusting said fuel stream to provide a heat input to the process, thereby generating a flue gas comprising nitrogen oxides,
- passing said flue gas with a reductant agent through a first catalyst bed comprising a selective reduction catalyst, thereby obtaining a first nitrogen oxide depleted flue gas,
- passing said first nitrogen oxides depleted flue gas through a second catalyst bed comprising a selective reduction catalyst, thereby obtaining a second nitrogen oxide depleted flue gas having a further reduced nitrogen oxide content compared to the first nitrogen oxides depleted flue gas.

14. Process according to the preceding claim comprising performing a selective non-catalytic reduction of the nitrogen oxides of the flue gas by injecting a reductant agent in said flue gas at a temperature of the flue gas comprised between 700 and 1200°C prior to passing said flue gas through the first catalyst bed.

15. Method of revamping of a plant for the conversion of a gas feed into a hydrogen-containing effluent gas, said plant comprising :
- a fired equipment (1) configured for the combustion of a fuel stream, thereby generating heat and a flue gas,
- a flue gas conduit (5) arranged for discharging the flue gas from the fired equipment (1), said method comprising arranging at least two catalyst beds in series in said flue gas conduit (5), each of the at least two catalyst beds comprising a selective reduction catalyst configured for the selective catalytic reduction of nitrogen oxides.
